# FASCICULE DE BREVET EUROPEEN

(11) **EP 0 918 449 B1**
(45) Date de publication et mention de la délivrance du brevet: **26.07.2006**
(21) Numéro de dépôt: 98410130.3
(22) Date de dépôt: 20.11.1998
(51) Int. Cl.: H05B 41/28, H05B 41/392, H02M 5/293

(54) **Circuit de commande de lampe fluorescente**
Schaltung zur Steuerung einer Leuchtstofflampe
Circuit for control of fluorescent lamp

(30) Priorité: 29.01.1998 FR 9801246; 21.11.1997 FR 9714869
(43) Date de publication de la demande: 26.05.1999
(73) Titulaire: STMicroelectronics S.A., 92120 Montrouge (FR)
(72) Inventeur: Wuidart, Luc, 83910 Pourrieres (FR); Bardouillet, Michel, 13790 Rousset (FR)
(74) Mandataire: de Beaumont, Michel

(56) Documents cités:
- EP-A- 0 021 508
- EP-A- 0 633 711
- WO-A-92/03898
- WO-A-95/12157
- DE-A- 4 200 900
- FR-A- 2 168 436
- GB-A- 2 067 318
- US-A- 4 302 717
- US-A- 4 970 437

## Description

La présente invention concerne le domaine des lampes fluorescentes alimentées à partir du réseau alternatif haute tension (par exemple, 220 volts/50 Hz). L'invention concerne plus particulièrement la commande de la lampe, essentiellement, en limitation de courant en fonctionnement nominal et en amorçage à l'allumage.

En fonctionnement nominal, il est nécessaire de prévoir dans le circuit d'alimentation de la lampe un élément limiteur du courant en raison de la constitution même des lampes fluorescentes. En effet, ce type de lampe se comporte, en fonctionnement nominal, comme un élément limiteur de tension, c'est-à-dire que la tension aux bornes de la lampe est indépendante de la tension d'alimentation, mais fixée par la puissance de la lampe elle-même. Par conséquent, pour alimenter une lampe fluorescente sur la tension du secteur, il est nécessaire de prévoir un élément limiteur de courant, généralement appelé "ballast".

A l'allumage, il est nécessaire de prévoir un élément d'amorçage ou de démarrage, généralement appelé "starter", destiné à chauffer les filaments que comporte la lampe fluorescente dans un premier temps, puis à l'amorcer par une surtension.

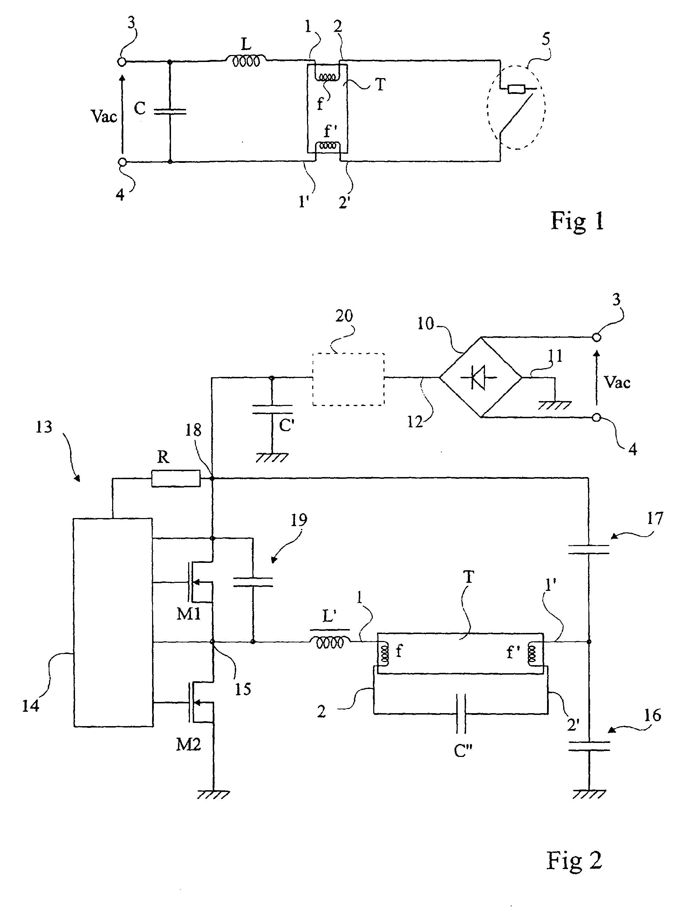

La figure 1 représente un exemple de schéma classique d'alimentation d'une lampe fluorescente. Une telle lampe 1 est généralement constituée d'un élément tubulaire T rempli de gaz et aux deux extrémités duquel sont prévus deux filaments f, f' d'excitation. Chaque filament est destiné à être raccordé électriquement par ses deux extrémités et est donc associé à deux bornes 1, 2, respectivement 1', 2', d'alimentation. Les deux filaments f, f' sont destinés à être alimentés par une tension alternative Vac, par exemple, la tension du secteur appliquée entre deux bornes 3, 4 d'alimentation du circuit de la lampe.

Dans l'exemple représenté à la figure 1, l'élément de limitation de courant est constitué d'une inductance L en fer, de forte valeur, intercalée entre une première borne 3 d'alimentation alternative et une première borne 1 d'un des filaments f de la lampe T. La deuxième borne du filament f est reliée, par l'intermédiaire d'un élément de démarrage 5, à une borne 2' du deuxième filament f', dont l'autre borne l'est connectée à la deuxième borne d'alimentation 4 du secteur. Un condensateur C relie les bornes 3 et 4.

L'élément d'amorçage ou de démarrage 5 est, le plus souvent, constitué d'un interrupteur thermique destiné à chauffer les filaments f et f' de la lampe T en court-circuitant les bornes 2 et 2' tant que les filaments sont froids. L'interrupteur thermique s'ouvre dès qu'il a atteint une température donnée, ce qui provoque une surtension déclenchant l'amorçage de la lampe grâce à la réserve d'énergie constituée par l'inductance L.

Le rôle de l'inductance L est, en fonctionnement nominal, de limiter le courant dans la lampe T de manière à ce que sa tension n'excède pas la valeur pour laquelle elle est conçue. Le rôle du condensateur C est de compenser le déphasage lié au montage inductif afin d'améliorer le facteur de puissance et de le rendre acceptable pour un raccordement au réseau.

Un inconvénient d'un système d'alimentation classique tel que représenté à la figure 1 est que le recours à une forte inductance (généralement de l'ordre de 1 Henry) conduit à un système volumineux et lourd. De plus, la nature inductive du montage qui nécessite une compensation du déphasage par le condensateur C requiert un condensateur de valeur importante (généralement de plus de 10 µF), donc électrolytique.

Un autre inconvénient d'un tel système est qu'il n'existe pas de gradateur d'intensité lumineuse adapté.

La figure 2 représente un exemple de schéma classique de circuit de limitation dit "électronique", c'est-à-dire mettant en oeuvre des composants actifs pour limiter le courant de la lampe fluorescente en fonctionnement nominal.

Un tel circuit est constitué d'un pont 10 de diodes dont deux bornes d'application d'une tension alternative sont connectées à deux bornes 3, 4 d'application de la tension Vac du secteur. Une première borne 11 de sortie redressée du pont 10 constitue une borne de masse du circuit. Une deuxième borne 12 de sortie redressée du pont 10 délivre, à l'aide d'un condensateur électrolytique C' de forte valeur, une alimentation continue à un convertisseur à découpage 13 servant à alimenter la lampe fluorescente T. Le convertisseur à découpage 13 est généralement constitué d'un circuit 14 de commande associé à deux transistors MOS de puissance M1, M2 (ou deux transistors bipolaires) connectés en série entre la borne 12 du pont 10 et la masse, le condensateur C' étant connecté en parallèle à cette association en série. Une borne 15 du convertisseur à découpage est connectée à une première borne d'une inductance haute fréquence L' montée, comme dans le cas de la figure 1, en série avec un des filaments f de la lampe T. Un condensateur C" de faible valeur relie les filaments f et f', et participe à l'amorçage de la lampe. La deuxième borne 1' du filament f' est connectée à la masse par l'intermédiaire d'un condensateur 16. Un autre condensateur 17 relie la borne 1' à une borne 18 d'entrée du convertisseur à découpage 13. Les condensateurs 16 et 17 servent à filtrer la composante continue dans la lampe T. La borne 18 reçoit la tension continue délivrée par le condensateur C'. Le transistor M1 est connecté entre la borne 18 et la borne 15 et le transistor M2 est connecté entre la borne 15 et la masse. Les transistors M1 et M2 sont commandés par le circuit 14 qui comporte également une entrée de réaction reliée à la borne 15 et qui est alimenté à partir de la borne 18 par l'intermédiaire d'une résistance R. Un condensateur 19 relie les bornes 15 et 18 et participe à la génération d'une alimentation auxiliaire nécessaire à la commande du transistor M1.

Le circuit 14 peut comporter d'autres bornes de configuration et de paramétrage non représentées. Le fonctionnement d'un circuit de limitation électronique tel que représenté à la figure 2 est parfaitement connu. Le pont 10 et le condensateur C' fournissent, pour une tension alternative de 220 volts, une alimentation de l'ordre de 300 volts continus au convertisseur à découpage qui est de type "demi-pont symétrique". Ce convertisseur fournit un courant alternatif à une fréquence généralement d'environ 30 kHz à la lampe fluorescente T par l'intermédiaire de l'inductance haute fréquence (en série) L' qui peut être de faible valeur (de l'ordre du mH).

Un système tel que représenté à la figure 2 économise l'emploi d'une forte inductance (L, figure 1).

Toutefois, un inconvénient d'un circuit tel que représenté à la figure 2 est qu'il requiert toujours un condensateur électrolytique C' de forte valeur (généralement supérieur à 10 µF) pour filtrer la tension redressée par le pont 10. Le recours à des condensateurs électrolytiques nuit à la durée de vie du circuit.

Un autre inconvénient du système représenté à la figure 2 est qu'il nécessite deux transistors MOS de puissance haute tension qui fonctionnent à haute fréquence.

Un autre inconvénient d'un tel système est qu'il est nécessaire d'adjoindre au pont 10, un circuit 20 de correction du facteur de puissance. Sans circuit 20, les harmoniques du courant d'alimentation détériorent fortement le facteur de puissance.

Le document EP-A-0 633 711 décrit un régulateur de puissance pour lampe à décharge dans lequel l'association série d'un interrupteur, d'un élément inductif et d'un condensateur est connectée aux bornes d'une alimentation alternative.

La présente invention vise à pallier les inconvénients des systèmes connus d'alimentation des lampes fluorescentes.

L'invention vise, en particulier, à proposer un nouveau circuit de commande d'une lampe fluorescente qui assure une limitation du courant nominal tout en étant d'un encombrement réduit et au moins partiellement intégrable.

La présente invention vise également à proposer une solution qui permette d'adjoindre une fonction de gradation d'intensité lumineuse au système de commande.

La présente invention vise également à améliorer la fiabilité du système de commande en évitant le recours à des condensateurs électrolytiques.

Une caractéristique de la présente invention est de prévoir une alimentation de la lampe fluorescente par un courant sinusoïdal à basse fréquence correspondant à la fréquence du secteur (par exemple, 50 hertz) tout en évitant le recours à une inductance de forte valeur au moyen d'un circuit actif fonctionnant à une fréquence plus élevée (par exemple, de l'ordre de 100 kHz).

Ainsi, selon la présente invention, on utilise un dispositif actif pour alimenter la lampe fluorescente en contrôlant son courant. Ce dispositif fournit un courant alternatif basse fréquence à la lampe fluorescente d'une forme similaire à celle d'un circuit de limitation de type ferromagnétique, c'est-à-dire utilisant une simple inductance de forte valeur.

Plus particulièrement, la présente invention prévoit un circuit de commande d'une lampe fluorescente comportant des moyens pour fournir un courant alternatif à basse fréquence à la lampe fluorescente, ces moyens étant commandés par une source de courant à découpage, commandable et fonctionnant à fréquence élevée.

Le circuit comprend un pont redresseur d'une tension d'alimentation alternative basse fréquence et, entre deux bornes de sortie redressée du pont, au moins un interrupteur constitutif de la source de courant à découpage. Un élément inductif étant commandé par l'interrupteur.

Selon un mode de réalisation de la présente invention, le circuit de commande comporte des moyens pour récupérer l'énergie dudit/desdits éléments inductifs lorsque l'interrupteur est ouvert.

Selon un mode de réalisation de la présente invention, l'interrupteur est monté en série avec une résistance de mesure entre deux bornes de sortie redressée du pont redresseur, l'interrupteur étant commandé par un circuit à partir d'une mesure du courant dans la résistance.

Selon un mode de réalisation de la présente invention, la source de courant à découpage est alimentée entre les deux bornes de sortie redressée du pont.

Selon un mode de réalisation de la présente invention, la lampe est connectée entre une première borne de l'alimentation alternative basse fréquence et une première borne d'entrée alternative du pont dont l'autre borne d'entrée alternative est reliée à une deuxième borne de l'alimentation alternative.

Selon un mode de réalisation de la présente invention, un condensateur de faible valeur est connecté en parallèle avec une association en série d'une inductance de faible valeur et de la lampe.

Selon un mode de réalisation de la présente invention, un seul élément inductif est connecté en série avec l'interrupteur entre les bornes de sortie redressée du pont.

Selon un mode de réalisation de la présente invention, le pont comporte, entre sa première borne d'entrée alternative et chacune des bornes de sortie redressée, un élément inductif.

Selon un mode de réalisation de la présente invention, lesdits moyens comportent un inverseur commandé à la fréquence de la tension alternative d'alimentation et propre à faire fonctionner en roue libre un élément inductif pendant les périodes d'ouverture de l'interrupteur.

Selon un mode de réalisation de la présente invention, le pont comporte un premier élément inductif en série avec une première diode du pont entre ladite deuxième borne de l'alimentation alternative et une première borne de sortie redressée, et un deuxième élément inductif en série avec une deuxième diode entre ladite première borne d'entrée alternative et ladite première borne de sortie redressée.

Selon un mode de réalisation de la présente invention, lesdits premiers éléments inductifs constituent des enroulements primaires respectifs de deux transformateurs d'isolement de la lampe par rapport à la tension d'alimentation alternative.

Selon un mode de réalisation de la présente invention, chaque transformateur comporte un premier enroulement secondaire de chauffage d'un filament de la lampe.

Selon un mode de réalisation de la présente invention, chaque transformateur comprend en outre un deuxième enroulement secondaire destiné à amorcer la lampe en formant, avec un condensateur connecté entre des premières bornes des filaments, un circuit de pompe de charge.

Selon un mode de réalisation de la présente invention, chaque transformateur comporte un troisième enroulement secondaire destiné à alimenter la lampe une fois amorcée.

Selon un mode de réalisation de la présente invention, le circuit de commande comporte des moyens pour faire varier l'intensité lumineuse de la lampe fluorescente.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 représente un premier mode de réalisation d'un circuit de commande d'une lampe fluorescente selon la présente invention ;
la figure 4 représente un deuxième mode de réalisation d'un circuit de commande d'une lampe fluorescente selon la présente invention ;
les figures 5A à 5D illustrent, sous forme de chronogrammes, le fonctionnement d'un circuit de commande selon la présente invention ;
la figure 6 représente un mode de réalisation d'un inverseur d'un circuit de commande tel que représenté aux figures 3 et 4 ; et
la figure 7 représente un troisième mode de réalisation d'un circuit de commande d'une lampe fluorescente selon la présente invention, incluant une fonction d'amorçage.

Les mêmes éléments ont été désignés par les mêmes références aux différentes figures. Pour des raisons de clarté, seuls les éléments du circuit d'alimentation qui sont nécessaires à la compréhension de la présente invention ont été représentés aux figures et seront décrits par la suite.

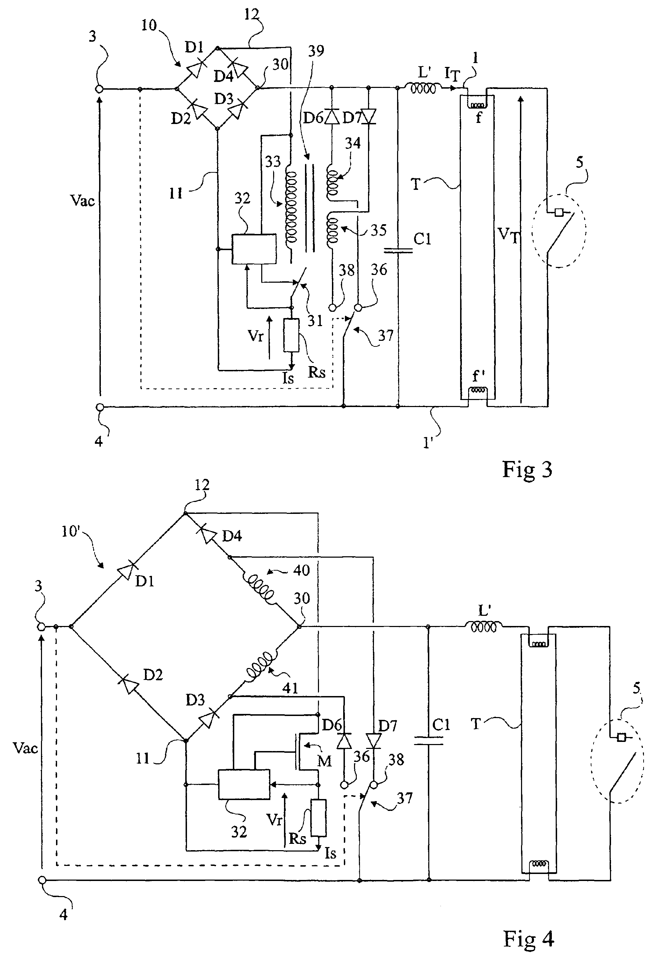

La figure 3 représente un premier mode de réalisation d'un circuit d'alimentation d'une lampe fluorescente T selon la présente invention.

Un tel circuit est constitué d'un pont 10 de diodes D1, D2, D3, D4, fournissant sur deux bornes 12, 11 de sortie, une tension alternative redressée. Une première borne d'alimentation alternative du pont est connectée à une première borne 3 d'application d'une tension d'alimentation alternative, par exemple la tension Vac du secteur. Selon le mode de réalisation de la figure 3, une deuxième borne 30 d'alimentation alternative du pont 10 est connectée à une deuxième borne 4 de l'alimentation du secteur, au moins par l'intermédiaire de la lampe T.

Ainsi, une caractéristique de la présente invention selon ce mode de réalisation, qui la distingue fondamentalement d'un circuit de commande classique tel que représenté à la figure 2, est que la lampe T est reliée à des bornes de tension alternative du pont et non à des bornes de tension redressée.

Selon la présente invention, la limitation du courant dans la lampe est effectuée par une source de courant à découpage associée à une résistance Rs de mesure du courant. Cette source de courant est essentiellement constituée d'un interrupteur 31 (par exemple un transistor MOS, un transistor bipolaire, etc.) monté en série avec la résistance Rs entre les bornes 12 et 11 de sortie redressée du pont 10. L'interrupteur 31 est commandé par un circuit électronique 32 à partir de la tension Vr mesurée aux bornes de la résistance Rs. Le circuit 32 est alimenté entre les bornes 12 et 11. Dans le mode de réalisation représenté à la figure 3, un élément inductif 33, ici l'enroulement primaire d'un transformateur 39, est intercalé en série entre la borne 12 et l'interrupteur 31.

Une inductance L' est intercalée en série entre la borne 30 et le premier filament f de la lampe T. Selon l'invention, cette inductance L' est de faible valeur (par exemple, de l'ordre de 1 à 10 mH) car son rôle n'est pas, à l'inverse d'un circuit tel que représenté à la figure 1, de limiter le courant dans la lampe T, mais de constituer un frein au pic de courant lié à la présence d'un condensateur C1 entre les bornes 30 et 4.

Pendant une alternance positive de la tension d'alimentation Vac et alors que l'interrupteur 31 est fermé, un courant circule à travers la diode D1, l'enroulement 33 du transformateur 39, la résistance Rs et la diode D3 et charge ainsi le condensateur C1. Lorsque ce courant atteint une valeur de consigne, connue du circuit 32 et mesurée par proportion de la tension Vr, l'interrupteur 31 s'ouvre et, dans un mode de réalisation simplifié (non représenté), le condensateur C1 se décharge.

Dans le mode de réalisation représenté à la figure 3, l'enroulement 33 du transformateur sert à stocker de l'énergie et à ralentir la pente du courant dans la résistance Rs à chaque fermeture de l'interrupteur 31. Lors de l'ouverture de l'interrupteur 31, un des enroulements secondaires 34, 35 sert à récupérer l'énergie réactive pour limiter la dissipation d'énergie. Dans ce cas, à l'ouverture de l'interrupteur 31, l'énergie stockée dans l'enroulement 33 est restituée au condensateur C1 par un des enroulements secondaires 34, 35 du transformateur selon l'alternance considérée.

Un premier enroulement secondaire 34 est connecté en série avec une diode D6 entre la borne 30 et une première borne 36 d'un inverseur 37 dont la deuxième borne 38 est connectée en série avec un deuxième enroulement secondaire 35 et une diode D7 à la même borne 30. Le point commun de l'inverseur 37 est relié à la borne 4 et les diodes D6 et D7 sont montées en sens inverse l'une par rapport à l'autre. L'inverseur 37 est commandé à la fréquence de l'alimentation alternative Vac et bascule alternativement d'une position où il relie la borne 30 à la borne 4 par l'intermédiaire de la diode D7 et l'enroulement 35 et une position où il relie la borne 4 à la borne 30 par l'intermédiaire de l'enroulement 34 et de la diode D6.

En supposant que l'inverseur 27 est fermé sur le contact 36 pendant une alternance positive, l'énergie stockée dans l'enroulement 33 avant l'ouverture de l'interrupteur 31 est restituée au condensateur C1 par l'enroulement 34 à travers la diode D6.

De façon similaire, si l'inverseur 37 est fermé sur le contact 38 pendant l'alternance négative, un courant circule dans la diode D2, la résistance Rs, l'interrupteur 31, l'enroulement 33 et la diode D4 pendant les périodes de fermeture de l'interrupteur 31 et l'énergie stockée dans l'enroulement 33 est restituée, à l'ouverture de l'interrupteur 31, par l'enroulement 35 à travers la diode D7.

La valeur à laquelle le courant dans la lampe T est limité au moyen d'un système selon la présente invention est fixée par le seuil d'ouverture de l'interrupteur 31 au moyen du circuit de commande 32. On notera que le circuit 32 est conçu pour que la fréquence des cycles de fermeture de l'interrupteur 31 soit très nettement supérieure à la fréquence de l'alimentation alternative. Par exemple, le circuit 32 est conçu pour que l'interrupteur 31 soit fermé à une fréquence de 100 kHz, son ouverture étant déclenchée à chaque période de découpage, par une mesure du courant circulant dans la résistance Rs.

Ainsi, le condensateur C1 peut être de faible valeur (par exemple, de l'ordre d'une centaine de nanofarads).

Dans le mode de réalisation exposé ci-dessus, la lampe fluorescente T est associée à un élément d'amorçage 5 classique.

Le système décrit ci-dessus permet de générer un courant alternatif à basse fréquence qui est adapté à l'alimentation d'une lampe fluorescente. L'inductance L' lisse la composante haute fréquence résiduelle du courant fourni à la lampe. Celle-ci peut donc être de faible taille/valeur. On notera que l'inductance L' intervient également sur le fonctionnement de l'élément d'amorçage 5.

On notera que les deux enroulements secondaires 34 et 35 du transformateur 39 doivent être de même taille l'un par rapport à l'autre et être adaptés à la tension nominale de la lampe fluorescente. Toutefois, il n'est pas nécessaire que la taille des enroulements secondaires 34 et 35 correspondent à la moitié de la taille de l'enroulement primaire 33. Par exemple, en supposant un enroulement primaire de 220 spires et une lampe conçue pour avoir un fonctionnement nominal à 90 volts, les enroulements secondaires 34 et 35 comportent de l'ordre de 90 spires chacun.

La figure 4 représente un deuxième mode de réalisation d'un circuit de commande d'une lampe fluorescente T selon la présente invention.

Ce mode de réalisation diffère de celui représenté à la figure 3 par le fait que la fonction de récupération de l'énergie réactive lors de l'ouverture de l'interrupteur de découpage (ici, symbolisé par un transistor MOS M) est remplie, non plus par un transformateur, mais par des inductances 40, 41.

Dans le mode de réalisation représenté à la figure 4, deux inductances 40 et 41 sont respectivement montées en série avec une diode D4, D3 du pont 10' de redressement. Les points milieu respectifs des associations en série des diodes, respectivement D3, D4, et des inductances, respectivement 41, 40, sont reliés aux bornes respectives 36, 38 de l'inverseur 37 par l'intermédiaire des diodes, respectivement D6, D7.

Comme dans le premier mode de réalisation, un circuit 32 de commande de l'interrupteur M mesure la tension Vr aux bornes d'une résistance Rs montée en série avec l'interrupteur M entre les bornes 12 et 11 du pont 10'. Le reste du circuit n'est pas modifié par rapport au montage exposé en relation avec la figure 3.

Pendant une alternance positive, le courant circule, lorsque l'interrupteur M est fermé, dans la diode D1, dans le transistor M, dans la résistance Rs, dans la diode D3 et dans l'inductance 41 pour charger le condensateur C1. A l'ouverture de l'interrupteur, c'est-à-dire lors du blocage du transistor M, le courant circule alors en roue libre à travers l'inductance 41 et la diode D6, l'inverseur 37 étant fermé sur le contact 36 pendant les alternances positives. Le même raisonnement s'applique pendant les alternances négatives, à travers l'inductance 40, la diode D4, le transistor M, la résistance Rs, la diode D2 pendant les périodes de fermeture de l'interrupteur et de roue-librage à travers l'inductance 40 et la diode D7 lorsque l'interrupteur est ouvert, l'inverseur 37 étant fermé sur le contact 38 pendant les alternances négatives.

Le choix du premier ou du deuxième mode de réalisation dépend, par exemple, du nombre d'éléments inductifs souhaité dans le circuit et/ou de la disponibilité d'un transformateur haute fréquence (figure 3).

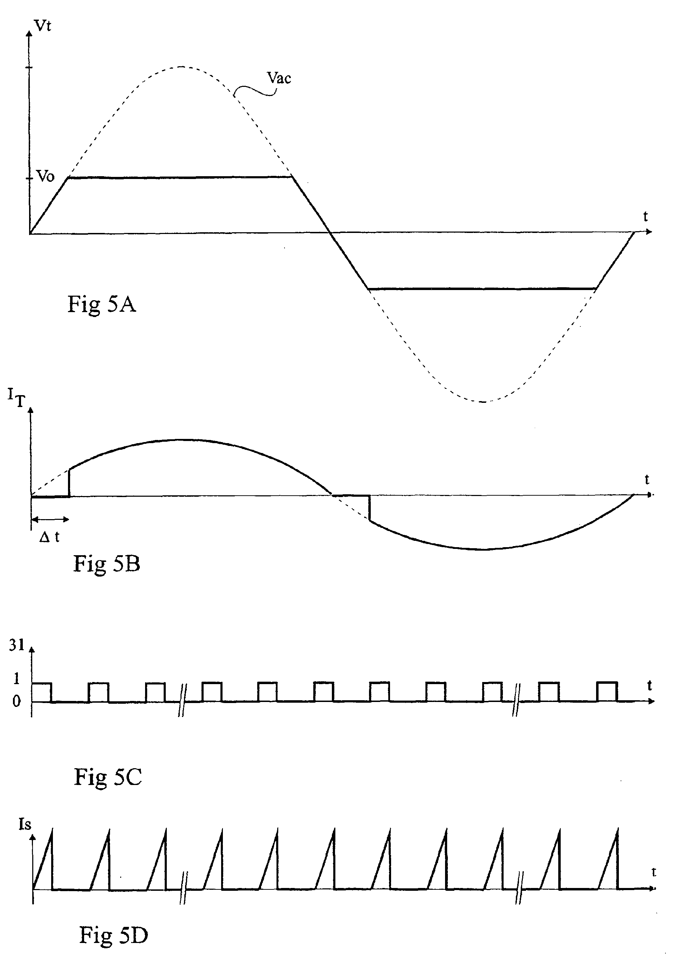

Le fonctionnement d'un système de commande tel que représenté aux figures 3 et 4 est illustré par les figures 5A à 5D. Les figures 5A et 5B représentent respectivement les allures de la tension V_{T} et du courant I_{T} de la lampe fluorescente. On suppose que la lampe est en fonctionnement nominal, c'est-à-dire que l'élément d'amorçage 5 est ouvert. Les figures 5C et 5D illustrent respectivement les périodes de fermeture de l'interrupteur 31 et le courant Is dans la résistance de mesure Rs. A la figure 5C, les périodes de fermeture de l'interrupteur 31 ont été symbolisées par des états 1 et les périodes d'ouvertures par des états 0.

Comme l'illustrent les figures 5C et 5D, l'interrupteur 31 est commandé à une fréquence élevée, par exemple de l'ordre de 100 kHz et le courant Is présente la forme d'un train de dents de scie dont l'amplitude est fixée par le seuil prédéterminé, connu du circuit 32. On voit ici apparaître le rôle d'amortisseur du courant dans la résistance Rs, joué par l'élément inductif (33, figure 3 - 40 ou 41, figure 4) en série avec l'interrupteur, qui ralentit la pente du courant à la fermeture de l'interrupteur 31 ou M.

Côté lampe fluorescente T, la tension V_{T} (figure 5A) est limitée à une valeur VO fonction de la puissance de la lampe fluorescente. Par exemple, pour une lampe fluorescente d'une puissance de 20 watts, qui conduit à une tension nominale de fonctionnement de l'ordre de 50 volts efficaces, le circuit de commande 32 est alors dimensionné pour délivrer un courant moyen de l'ordre de 400 milliampères efficaces sur une période de la tension d'alimentation Vac.

Comme l'illustre la figure 5B, le courant I_{T} dans la lampe T est à la fréquence de l'alimentation alternative Vac en étant lissé par l'inductance L'. Le retard Δt présent à chaque début d'alternance correspond au temps mis par la tension Vac à atteindre la tension d'amorçage de la lampe (par exemple, sa tension de limitation V0).

Un avantage de la présente invention, en particulier par rapport à un circuit classique tel que représenté à la figure 2, est que le système de commande prélève du courant sensiblement sur toute l'alternance de l'alimentation alternative. Par conséquent, l'invention réduit considérablement les harmoniques de courant dus aux pics de courant se produisant à chaque alternance dans un système classique. Dans un mode de réalisation optimisé, le circuit 32 est conçu pour moduler le courant prélevé sur le secteur, par exemple, selon une sinusoïde en phase avec la tension secteur. Une telle modulation permet notamment d'améliorer le facteur de puissance et/ou d'obtenir une gradation de l'intensité lumineuse comme on le verra par la suite.

On notera que d'autres moyens de commande de la source de courant à découpage ainsi réalisée et, en particulier, d'autres moyens de détection de courant que la résistance Rs pourront être prévus.

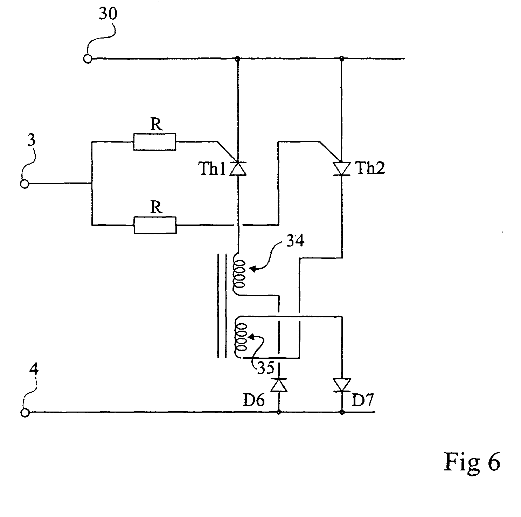

La figure 6 représente un mode de réalisation d'un inverseur 37 commandé à la fréquence de l'alimentation alternative du secteur. On notera toutefois que d'autres structures d'inverseur adaptées pourront être utilisées.

Dans l'exemple représenté à la figure 6, on a supposé un mode de réalisation du système de commande conforme à celui de la figure 3. Toutefois, les positions respectives des diodes D6 et D7 et des enroulements 34 et 35 par rapport aux bornes 30 et 4 ont été inversées. Cela n'a aucune incidence sur le fonctionnement dans la mesure où ces éléments sont, de toute façon, associés en série.

L'inverseur est ici constitué de deux thyristors Th1, Th2, respectivement à gâchette de cathode et à gâchette d'anode, associés en série avec les enroulements secondaires 34 et 35. Ainsi, la cathode du thyristor Th1 est connectée à la borne 30 du pont (10, figure 3) et son anode est connectée à une première extrémité de l'enroulement secondaire 34 dont une deuxième extrémité est reliée à la borne 4 par l'intermédiaire de la diode D6. L'anode du thyristor Th2 est reliée à la borne 30 et sa cathode est reliée à la borne 4 par l'intermédiaire de l'association en série de l'enroulement 35 et de la diode D7. Les gâchettes respectives de cathode et d'anode des thyristors Th1 et Th2 sont reliées, chacune par l'intermédiaire d'une résistance R, à la borne 3 d'alimentation alternative. Les résistances R sont de forte valeur (par exemple, de l'ordre de plusieurs centaines de KΩ) pour limiter le courant dans les gâchettes des thyristors Th1 et Th2.

Lors des alternances positives, le thyristor Th1 devient passant dès que son courant de gâchette est suffisant pour l'amorcer, tandis que le thyristor Th2 qui est à gâchette d'anode ne peut être rendu passant en raison du sens de son courant de gâchette. A l'inverse, pendant les alternances négatives, le thyristor Th1 reste bloqué tandis que le thyristor Th2 est rendu passant.

On a ainsi réalisé un inverseur commandé directement par l'alimentation du secteur.

Bien entendu, l'inverseur 37 à la fréquence de la tension alternative d'alimentation pourra être réalisé par d'autres moyens que ceux illustrés à titre d'exemple à la figure 6.

Un avantage de la présente invention est qu'elle permet de remplacer un circuit de limitation de type ferromagnétique (figure 1) lourd et volumineux par un circuit électronique actif de faible encombrement dans lequel tous les composants peuvent être intégrés. En effet, les valeurs respectives des éléments inductifs et capacitifs sont parfaitement adaptées à une telle intégration. En particulier, les éléments inductifs ont des valeurs de l'ordre du mH.

Un autre avantage de la présente invention par rapport au limitateur électronique illustré par la figure 2 est qu'elle ne nécessite pas de condensateur électrolytique de forte valeur. En effet, le condensateur C1 est, selon la présente invention, un condensateur d'une valeur de l'ordre d'une centaine de nanofarads. L'absence de recours à un condensateur électrolytique améliore considérablement la durée de vie du système de commande.

Un autre avantage de la présente invention est qu'elle nécessite un seul transistor de puissance fonctionnant à haute fréquence.

Pour réaliser une fonction de gradation d'intensité lumineuse au moyen d'un circuit de commande de l'invention, il suffit de modifier la durée des périodes de fermeture de l'interrupteur 31 entre une durée minimale conduisant à une puissance minimale et une durée maximale prévue, avec une marge de sécurité suffisante, pour être adaptée à la tension nominale maximale que peut supporter la lampe fluorescente.

La réalisation pratique d'un système de gradation d'intensité lumineuse est à la portée de l'homme du métier en fonction des indications fonctionnelles données ci-dessus. Par exemple, on pourra introduire une résistance variable (potentiomètre) dans le circuit de commande 32 de manière à modifier la tension de mesure exploitée par ce circuit et modifier ainsi la durée des périodes de fermeture de l'interrupteur.

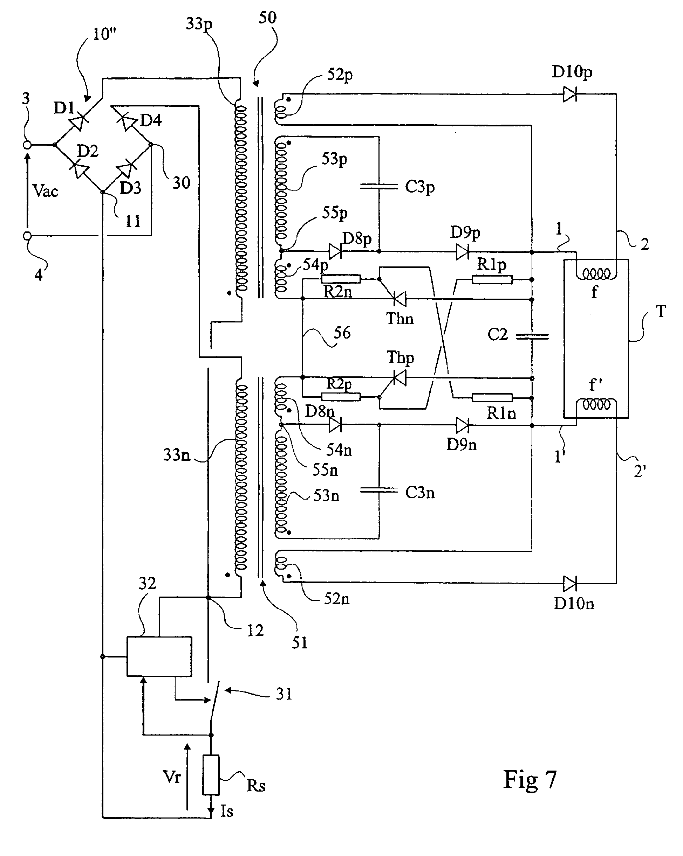

La figure 7 représente un troisième mode de réalisation d'un circuit de commande d'une lampe fluorescente selon la présente invention. Le mode de réalisation illustré par la figure 7 est particulièrement adapté à un circuit de commande dans lequel on effectue une gradation de puissance et est destiné à remplacer, non seulement le limiteur de courant (ballast) classique, mais également l'élément d'amorçage (starter).

Ce circuit prévoit également une source de courant à découpage 31, 32 commandable et fonctionnant à fréquence élevée. Cette source de courant est, comme dans les modes de réalisation précédents, par exemple constituée d'un interrupteur 31 monté en série avec une résistance Rs de mesure du courant entre des bornes 12 et 11 de sortie redressée d'un pont de diodes 10". L'interrupteur 31 est, comme précédemment, commandé par un circuit électronique 32 à partir de la tension Vr mesurée aux bornes de la résistance Rs.

Dans le mode de réalisation représenté à la figure 7, le pont 10" de redressement comprend, dans deux de ses branches, un enroulement primaire d'un transformateur associé aux alternances concernées par la branche. Ainsi, l'anode de la diode D1 du pont 10" est reliée à la borne 3 d'application de la tension alternative Vac, tandis que la cathode de la diode D1 est reliée à une première borne d'un enroulement 33p d'un premier transformateur 50 dont la deuxième borne constitue la borne 12 de sortie positive de l'alimentation redressée. De même, l'anode de la diode D4 est reliée à la deuxième borne 30 d'alimentation alternative du pont 10" (connectée à la deuxième borne 4 de l'alimentation du secteur), la cathode de la diode D4 étant reliée à une première borne d'un enroulement primaire 33n d'un deuxième transformateur 51 associé aux alternances négatives et dont la deuxième borne est connectée à la borne 12. Le reste du pont (diodes D2, D3) est similaire à un pont de diodes classique tel que représenté à la figure 3.

Ainsi, côté secteur, le montage de la figure 7 se distingue du montage de la figure 3 essentiellement par l'emploi de deux transformateurs 50, 51 respectivement associés aux alternances positive et négative de la tension secteur.

Selon le mode de réalisation de la figure 7, la partie du circuit qui sera décrite ci-après et qui est associée aux secondaires des transformateurs 50 et 51 est isolée du secteur. Chaque secondaire des transformateurs 50 et 51 comprend trois enroulements, respectivement 52p, 53p, 54p, et 52n, 53n, 54n. Les enroulements 53p et 54p (respectivement 53n et 54n) ont un point commun 55p (55n). L'enroulement 52p (52n) n'a pas de point commun avec les autres enroulements secondaires. Enfin, les enroulements 54p et 54n ont un point commun 56.

La structure des circuits, côté secondaires des transformateurs, est similaire pour chaque transformateur respectivement associé aux alternances positive ou négative. Les composants intervenant lors des alternances positives sont identifiés par la lettre p. Les composants identiques intervenant lors des alternances négatives portent la même référence associée à la lettre n.

Le circuit représenté à la figure 7 permet l'amorçage de la lampe T grâce à un fonctionnement de type pompe de charge utilisant les enroulements 53 et 54. Ce circuit correspond, pour chaque transformateur 50 et 51, à un convertisseur dit "à accumulation isolée" (flyback).

Le point milieu 55p (55n) des enroulements 53p et 54p (53n et 54n) est connecté, par l'intermédiaire de deux diodes D8p, D9p (D8n, D9n) en série, à une première borne 1 (1') d'un filament f (f') de la lampe T. La borne 1 (1') est reliée, par l'intermédiaire de l'enroulement 52p (52n) monté en série avec une diode D10p (D10n), à la deuxième borne 2 (2') du filament concerné f (f'). Un condensateur C2 d'accumulation est connecté entre les bornes 1 et 1'. On notera que ce condensateur est, selon l'invention, d'une valeur de l'ordre de quelques dizaines de nanofarads et n'a donc pas besoin d'être électrolytique. La borne de l'enroulement 53p (53n), opposée au point 55p (55n), est connectée au point milieu de l'association en série des diodes D8p et D9p (D8n et D9n) par l'intermédiaire d'un condensateur C3p (C3n) de faible valeur (de l'ordre de la centaine de picofarads).

Pour chaque alternance, le circuit associé aux secondaires d'un des transformateurs est refermé par l'intermédiaire d'un thyristor, respectivement Thp ou Thn, connecté entre la borne du condensateur C2 qui est opposée à la borne du filament 1 (1') concerné par l'alternance, et le point milieu 56 entre les enroulements 54p et 54n. Ainsi, l'anode du thyristor Thn est reliée à la borne 1. L'anode du thyristor Thp est reliée à la borne 1'. Les cathodes respectives des thyristors Thn et Thp sont reliées au point 56. Pour assurer la commande des thyristors Thp et Thn, leurs gâchettes respectives sont reliées à la borne du condensateur C2 opposée à celle connectant leur anode, par l'intermédiaire d'une résistance de commande, respectivement R1n, R1p. La gâchette de chaque thyristor est également reliée au point 56 par l'intermédiaire d'une résistance R2p, R2n constituant, avec la résistance R1p, R1n concernée, un pont diviseur résistif entre le point 56 et la borne 1, respectivement 1', de la lampe T.

Le fonctionnement du circuit illustré par la figure 7 sera décrit en relation avec une alternance positive. Le fonctionnement pendant les alternances négatives se déduisant sans difficulté de l'exposé ci-dessous.

On suppose que la lampe T est froide, c'est-à-dire qu'elle se comporte comme un circuit ouvert. Dans ce cas, à chaque fermeture de l'interrupteur 31, un courant croît linéairement dans l'enroulement primaire 33p du transformateur 50. Les enroulements secondaires et primaire sont connectés de manière à ce que la diode D8p soit bloquée lorsque l'interrupteur 31 est conducteur. Pendant cette période où l'interrupteur 31 est fermé, aucun courant ne circule dans les secondaires du transformateur 50. L'ouverture de l'interrupteur 31 provoque l'inversion du sens de la tension aux bornes des enroulements secondaires du transformateur 50. Les diodes D8p et D9p deviennent alors conductrices et l'énergie emmagasinée dans le transformateur 50 est transmise aux condensateurs C3p et C2. Le courant, dans le circuit secondaire, décroît linéairement jusqu'à s'annuler. L'interrupteur 31 est de nouveau fermé et ce cycle recommence. Pendant les périodes d'ouverture de l'interrupteur 31 et pendant les alternances positives, le thyristor Thp est conducteur, alors que le thyristor Thn est bloqué. On notera que le condensateur C2 de pompe de charge accumule de l'énergie et voit la tension à ses bornes augmenter aussi bien pendant les alternances positives que pendant les alternances négatives.

On notera que, comme précédemment, tant que la tension aux bornes de la lampe T n'a pas atteint une valeur suffisante et tant que les filaments f et f' ne sont pas suffisamment chauds, celle-ci se comporte comme un circuit ouvert. Pendant les alternances positives et pendant les périodes d'ouverture de l'interrupteur 31, un courant circule dans l'enroulement 52p dans la diode D10p pour chauffer le filament f. Quand la tension aux bornes du condensateur C2 devient suffisante, la lampe T s'amorce. Une fois la lampe amorcée, la tension aux bornes de l'enroulement 52p diminue. Par conséquent, le courant de chauffage du filament f diminue sans toutefois s'interrompre.

Tant que la lampe n'est pas amorcée, les tensions des enroulements secondaires des transformateurs sont fonction des spires respectives de ces enroulements. On veillera à ce que l'enroulement 53p soit de plus forte tension que l'enroulement 54p, et que l'enroulement 52p soit l'enroulement de tension la plus faible. De plus, on veillera à ce que l'enroulement 54p soit réalisé avec un fil de section suffisante, dans la mesure où cet enroulement doit être conçu pour laisser passer le courant nominal de la lampe T une fois amorcée.

On notera que, pendant le préchauffage de la lampe T, les tensions aux bornes des enroulements secondaires sont plus importantes qu'en régime nominal. Cela n'est pas gênant dans la mesure où, tant qu'elle n'est pas amorcée, la lampe ne prélève pas de courant. A titre d'exemple particulier de réalisation, l'enroulement de préchauffage 52p du filament f est d'une tension de 8 à 10 volts tant que la lampe n'est pas amorcée. Cette tension chute à 4 volts, une fois la lampe amorcée. L'enroulement 54p a une tension de quelques centaines de volts. L'enroulement 53p a la plus forte tension des enroulements secondaires, par exemple, de l'ordre de 500 à 1000 volts, tant que la lampe n'est pas amorcée.

Un avantage du mode de réalisation illustré en relation avec la figure 7 est qu'il se prête particulièrement à une fonction de gradation d'intensité lumineuse. En effet, grâce à la présence des enroulements 52p, 52n de préchauffage des filaments f et f', on évite tout scintillement de la lampe T par son refroidissement en cas de baisse d'intensité lumineuse, donc de baisse de puissance transmise aux secondaires des transformateurs. Avec un circuit d'amorçage classique qui fonctionne selon un principe thermique, le circuit d'amorçage provoque des coupures intempestives et aléatoires de la lampe.

On notera que les transformateurs 50 et 51 qui ont été représentés à la figure 7 avec un point commun 12 des enroulements primaires 33p et 33n se prêtent particulièrement bien à la réalisation du circuit de l'invention au moyen d'un transformateur intégrable. On pourra toutefois prévoir, à titre de variante, d'associer chaque primaire des transformateurs 50 et 51 à l'anode des diodes respectivement D1 et D4. Le point 12 redevient alors les anodes des diodes D1 et D4, comme dans les figures précédentes. Le fonctionnement du circuit n'en est pas pour autant modifié par rapport à celui exposé en relation avec la figure 7.

On notera que le mode de réalisation illustré par la figure 7 présente les mêmes avantages que les modes de réalisation précédents pour ce qui concerne l'absence de recours à une forte inductance et l'absence de recours à un condensateur électrolytique. De plus, le circuit de la figure 7 correspond à un "ballast" électronique complet (amorçage, préchauffage, possibilité de gradation). En outre, ce circuit s'applique particulièrement bien au cas où on souhaite que la lampe T soit isolée du secteur.

Bien entendu, la présente invention est susceptible de diverses variantes et modifications qui apparaîtront à l'homme de l'art. En particulier, les dimensions respectives des différents composants utilisés seront adaptées en fonction de la puissance de la lampe fluorescente. De plus, les montages décrits ci-dessus à titre d'exemple pourront être modifiés pourvu qu'ils respectent la caractéristique fonctionnelle de créer une source de courant à découpage de fréquence élevée tout en fournissant un courant alternatif basse fréquence à la lampe fluorescente.

En outre, bien que l'on ait considéré dans la description qui précède des figures 3 et 4 la connexion, en série avec l'inductance L', d'une lampe fluorescente T en parallèle avec un circuit d'amorçage 5, on pourra également utiliser le circuit de commande de l'invention pour connecter, en série avec l'inductance L', une lampe fluorescente déjà associée à un circuit de commande électronique classique (figure 2). En d'autres termes, les modes de réalisation des figures 3 et 4 peuvent être mis en oeuvre en complément d'un "ballast" électronique classique, en particulier, si celui-ci utilise des transistors bipolaires et un élément du type transformateur de commande. L'invention procure alors l'avantage de permette une fonction de gradation de l'intensité lumineuse au moyen d'un circuit simple et peu encombrant.

## Revendications

1. Circuit de commande d'une lampe fluorescente (T), comprenant
un pont (10) redresseur d'une tension d'alimentation alternative basse fréquence (Vac), **caractérisé en ce que** : ladite lampe est connectée en série avec une inductance (L') entre une borne d'entrée alternative (30) du pont, et une première borne (4) d'application de la tension d'alimentation alternative ;
entre deux bornes (11, 12) de sortie redressée du pont, un élément inductif (33) en série avec un premier interrupteur (31) constitutif d'une source de courant à découpage, commandable et fonctionnant à fréquence élevée, ledit élément inductif (33) constituant un primaire d'un transformateur (39) dont le secondaire comporte deux enroulements (34, 35) dont une des bornes respectives est connectée en série avec une diode (D6, D7) à ladite première borne d'entrée alternative du pont et dont l'autre borne est connectée, par l'intermédiaire d'un inverseur (37), à ladite première borne d'application de la tension alternative ; et
une résistance (Rs) de mesure du courant dans le premier interrupteur (31) pour conditionner ses périodes d'ouverture et de fermeture, ladite lampe (T) étant alimentée par un courant alternatif basse fréquence constitué en partie de l'énergie stockée dans l'élément inductif (33) fonctionnant en roue libre pendant les périodes d'ouverture de l'interrupteur (31).

2. Circuit de commande d'une lampe fluorescente (T) comprenant
un pont (10') redresseur d'une tension d'alimentation alternative basse fréquence (Vac), **caractérisé en ce que**: deux éléments inductifs (40, 41) sont respectivement montés en série avec une diode (D3, D4) du pont, ladite lampe étant en série avec une inductance (L') entre une première borne d'entrée alternative (30) du pont et une première borne (4) d'application de la tension alternative ;
entre deux bornes (11, 12) de sortie redressée du pont, un interrupteur (M) constitutif d'une source de courant à découpage, commandable et fonctionnant à fréquence élevée, ledit interrupteur (M) étant en série avec une résistance (Rs) de mesure du courant le traversant pour conditionner ses périodes d'ouverture et de fermeture ; et
entre un inverseur (37) connecté à ladite première borne d'application de la tension alternative (30) et les points milieux respectifs desdites associations en série des éléments inductifs et des diodes du pont, deux diodes (D6, D7), ladite lampe (T) étant alimentée par un courant alternatif basse fréquence constitué en partie de l'énergie stockée dans les éléments inductifs (40, 41) fonctionnant en roue libre pendant les périodes d'ouverture de l'interrupteur (M).

3. Circuit de commande d'une lampe fluorescente (T) comprenant
un pont (10") redresseur d'une tension d'alimentation alternative (Vac) basse fréquence, **caractérisé en ce qu'**il comprend:
un premier élément inductif (33p) en série avec une première diode (D1) du pont entre une première borne (30) d'entrée alternative du pont et une première borne de sortie redressée (12); et
un deuxième élément inductif (33n) en série avec une deuxième diode (D4) entre ladite première borne (30) d'entrée alternative et ladite première borne (12) de sortie redressée, la première borne d'entrée (30) alternative du pont étant connectée directement à une première borne (4) de l'alimentation alternative, tandis que l'autre borne d'entrée alternative du pont est reliée directement à une deuxième borne de l'alimentation alternative (3) ; et
entre les deux bornes de sortie redressée (11, 12) du pont, un interrupteur (31) constitutif d'une source de courant à découpage, commandable et fonctionnant à fréquence élevée, dont les périodes de fermeture sont conditionnées par la mesure du courant traversant une résistance (Rs) en série avec celui-ci, chacun des éléments inductifs constituant le primaire d'un transformateur (50, 51) dont les secondaires respectifs sont chacun en série avec un de deux filaments de la lampe (T) à fluorescence, ladite lampe (T) étant alimentée par un courant alternatif basse fréquence constitué en partie de l'énergie stockée dans les éléments inductifs (50, 51) fonctionnant en roue libre pendant les périodes d'ouverture de l'interrupteur.

4. Circuit de commande selon l'une quelconque des revendications 1 à 3, dans lequel la source de courant à découpage (31, M, 32) est alimentée entre les deux bornes (11, 12) de sortie redressée du pont (10, 10', 10").

5. Circuit de commande selon la revendication 1 ou 2, dans lequel un condensateur (C1) de faible valeur est connecté en parallèle avec l'association en série de l'inductance (L') de faible valeur et de la lampe (T).

6. Circuit de commande selon la revendication 1 ou 2, dans lequel ledit inverseur (37) est commandé à la fréquence de la tension alternative d'alimentation et est propre à faire fonctionner en roue libre ledit élément inductif (33) ou un desdits éléments inductifs (40, 41) pendant les périodes d'ouverture de l'interrupteur (31, M).

7. Circuit de commande selon la revendication 3, dans lequel chaque transformateur (50, 51) comporte un premier enroulement secondaire (52p, 52n) de chauffage d'un filament (f, f') de la lampe (T).

8. Circuit de commande selon la revendication 7, dans lequel chaque transformateur (50, 51) comprend en outre un deuxième enroulement secondaire (53p, 53n) destiné à amorcer la lampe (T) en formant, avec un condensateur (C2) connecté entre des premières bornes (1, 1') des filaments (f, f'), un circuit de pompe de charge.

9. Circuit de commande selon la revendication 8, **caractérisé en ce que** chaque transformateur (50, 51) comporte un troisième enroulement secondaire (54p, 54n) destiné à alimenter la lampe (T) une fois amorcée.

10. Circuit de commande selon l'une quelconque des revendications 1 à 9, **caractérisé en ce qu'**il comporte des moyens pour faire varier l'intensité lumineuse de la lampe fluorescente.

## Claims

1. A control circuit for a fluorescent lamp (T) comprising a rectifying bridge (10) of a low frequency a.c. voltage (Vac) **characterized in that**:
said lamp is connected in series with an inductance (L') between an a.c. input terminal (30) of the bridge and a first terminal (4) for application of an a.c. power supply voltage;
between two rectified output terminals (11, 12) of the bridge, an inductive element (33) in series with a first switch (31) forming a controllable switch mode current source an operating at a high frequency, said inductive element (33) forming the primary of a transformer (39), the secondary of which comprises two windings (34, 35), one respective terminal of which is connected, in series with a diode (D6, D7), to said first a.c. input terminal of the bridge, and the other terminal of which is connected through an inverter (37) to said first a.c. voltage terminal; and
a resistor (Rs) for measuring the current through the first switch (31) for controlling its off and on periods, said lamp (T) being supplied through a low frequency a.c. current partially formed of the energy stored in the inductive element (33) operating as a free wheel during the off periods of the switch (31).

2. A control circuit of a fluorescent lamp (T) comprising a bridge (10') for rectifying a low frequency a.c. power supply voltage (Vac), **characterized in that**:
two inductive elements (40, 41) are respectively serially connected with a diode (D3, D4) of the bridge, said lamp being in series with an inductance (L') between a first a.c. input terminal (30) of the bridge and a first terminal (4) for application of the a.c. voltage;
between two rectified output terminals (11, 12) of the bridge, a switch (M) forming a controllable switch mode current source and operating at a high frequency, said switch (M) being in series with a resistor (Rs) for measuring the current therethrough for controlling its on and off periods; and
between an inverter (37) connected to said first a.c.
voltage application terminal (30) and the respective middle points of said series connections of the inductive elements and the diode of the bridges, two diodes (D6, D7), said lamp (T) being supplied by a low frequency a.c. current partially formed of the energy stored in the inductive elements (40, 41) operating as a free wheel during the off period of the switch (M).

3. A control circuit of a fluorescent lamp (T) comprising a bridge (10") for rectifying a low frequency a.c. power supply voltage (Vac), **characterized in that** it comprises:
a first inductive element (33p) in series with the first diode (D1) of the bridge between a first a.c. input terminal (30) of the bridge, and a first rectified output terminal (12);
a second inductive element (33n) in series with a second diode (D4) between said first a.c. input terminal (30) and said first rectified output terminal (12), the first a.c. input terminal (30) of the bridge being directly connected with a first terminal (4) of the a.c. power supply, while the other a.c. input terminal of the bridge is directly connected with a second terminal of the a.c. power supply (3); and
between the two rectified output terminals (11, 12) of the bridge, a switch (31) forming a controllable switch mode current source and operating at a high frequency, the on periods of which are determined by the measurement of the current through a resistor (Rs) in series therewith, each of the inductive elements constituting the primary of a transformer (50, 51) the respective secondaries of which are in series with one of the two filaments of the fluorescent lamp (T), said lamp (T) being supplied by a low frequency a.c. current partially formed by the energy stored in the inductive elements (50, 51) operating as a free wheel during the off periods of the switch.

4. The control circuit of any of claims 1 to 3, wherein the switched-mode current source (31, M, 32) is supplied between the two rectified output terminals (11, 12) of the bridge (10, 10', 10").

5. The control circuit of claim 1 or 2, wherein a capacitor (C1) of low value is connected in parallel with the series connection of the inductance (L') of low value and the lamp (T).

6. The control circuit of claim 1 or 2, wherein said inverter (37) is controlled at the frequency of the a.c. supply voltage and is capable of operating said inductive element (33); or one of said inductive elements (40, 41) in free wheel during the opening periods of the switch (31, M).

7. The control circuit of claim 3, wherein each transformer (50, 51) includes a first secondary winding (52p, 52n) of heating of a filament (f, f') of the lamp (T).

8. The control circuit of claim 7, wherein each transformer (50, 51) further includes a second secondary winding (53p, 53n) for starting the lamp (T) by forming, with a capacitor (C2) connected between first terminals (1, 1') of the filaments (f, f'), a charge pump circuit.

9. The control circuit of claim 8, **characterized in that** each transformer (50, 51) includes a third secondary winding (54p, 54n) for supplying the lamp (T) once started.

10. The control circuit of any of claims 1 to 9, **characterized in that** it includes means for varying the light intensity of the fluorescent lamp.

## Patentansprüche

1. Eine Steuerschaltung für eine fluoreszierende Lampe (T), die eine Gleichrichterbrucke (10) mit eirter Niedrigfrequenz-Wechselspannung (Vac) aufweist, **dadurch gekennzeichnet,**
**dass** die Lampe in Serie mit einer Induktanz (L') zwischen einem Wechselstrom-Eingangsanschluss (30) der Brücke und einem ersten Anschluss (4) verbunden ist zum Anlegen einer Wechselstrom-Versorgungsspannung;
**dass** zwischen zwei gleichgerichteten Ausgangsanschlüssen (11, 12) der Brücke, ein induktives Element (33) in Serie mit einem ersten Schalter (31) vorgesehen ist, die eine steuerbare getaktete Stromquelle bilden und mit einer hohen Frequenz arbeiten, wobei das induktive Element (33) eine Primärseite eines Transformators (39) bildet, dessen Sekundärseite zwei Wicklungen (34, 35) aufweist, wobei ein entsprechender Artschluss davon in Serie mit einer Diode (D6, D7) mit dem ersten Wechselstrom-Eingangsanschluss der Brücke verbunden ist und dessen anderer Anschluss über einen Inverter (37) mit dem ersten Wechselstrom-Spannungsanschluss verbunden ist; und
**dass** ein Widerstand (Rs) zum Messen des Stroms durch den ersten Schalter (31) vorgesehen ist zum Steuern seiner AUS- und EIN-Perioden, wobei die Lampe (T) über eine Niedrigfrequenz-Wechselspannung versorgt wird, die teilweise gebildet wird aus der Energie, die in dem induktiven Element (33) gespeichert wird, das als ein Freilaufelement während der AUS-Perioden des Schalters (31) arbeitet

2. , Eine Steuerschaltung einer fluoreszierenden Lampe (T), die eine Brücke (10') aufweist zum Gleichrichten einer Wechselstrom-Versorgungsspannung (Vac) mit niedriger Frequenz, **dadurch gekennzeichnet,**
**dass** zwei induktive Elemente (40, 41) jeweils seriell mit einer Diode (D3, D4) der Brücke verbunden sind, wobei ctie Lampe in Serie mit einer Induktanz (L') zwischen einem ersten Wechselstrom-Eingangsanschluss (30) der Brücke und einem ersten Anschluss (4) zum Anlegen der Wechselstromspannung angeordnet ist;
**dass** zwischen zwei gleichgerichteten Ausgangsanschlüssen (11, 12) der Brücke, ein Schalter (M) vorgesehen ist, der eine steuerbare getaktete Stromquelle bildet und mit einer hohen Frequenz arbeitet, wobei der Schalter (M) in Serie mit einem Widerstand (Rs) angeordnet ist zum Messen des Stroms dort hindurch, um dessen EIN- und AUS-Perioden zu steuern; und
**dass** zwischen einem Inverter (37), der mit einem ersten Wechselstrom-Spannungsanteganschiuss (30) verbunden ist, und den jeweiligen Mittelpunkten aus der Serienverbindung des induktiven Elements und der Diode der Brücken, zwei Dioden (D6, D7) vorgesehen sind, wobei die Lampe (T) mit einem Wechselstrom mit niedriger Frequenz versorgt wird, der teilweise aus der Energie gebildet wird, die in den induktiven Elementen (40, 41) gespeichert ist, die als ein Freilaufelement während der AUS-Periode des Schalters (M) arbeiten

3. Eine Steuerschaltung für eine fluoreszierende Lampe (T), die eine Brücke (10") aufweist zum Gleichrichten einer Gleichstrom-Versorgungsspannung (Vac) mit niedriger Frequenz, **dadurch gekennzeichnet, dass** die Steuerschaltung Folgendes aufweist:
ein erstes induktives Element (33p), das in Serie geschaltet ist mit der ersten Diode (D1) der Brücke zwischen emem ersten Wechselstrom-Eingangsanschluss (30) der Brücke und einem ersten gleichgerichteten Ausgangsanschluss (12);
ein zweites induktives Element (33n), das in Serie geschaltet ist mit einer zweiten Diode (D4) zwischen dem ersten Gleichstrom-Eingangsanschluss (30) und dem ersten gleichgerichteten Ausgangsanschluss (12), wobei der erste Wechselstrom-Eingangsanschluss (30) der Brücke direkt mit einem ersten Anschluss (4) der Wechselstrom-Versorgung verbunden ist, während der andere Wechselstrom-Eingangsanschluss der Brücke direkt mit einem zweiten Anschluss der Wechselstrom-Versorgung (3) verbunden ist; und
dass zwischen den zwei gleichgerichteten Ausgangsanschlüssen (11, 12) der Brücke ein Schalter (31) eine steuerbare getaktete Stromquelle bildet und mit einer hohen Frequenz arbeitet, deren AN-Perioden bestimmt werden durch die Messung des Stroms durch einen Widerstand (Rs), der in Serie damit geschaltet ist, wobei jedes der induktiven Elemente die Primärseite eines Transformators (50, 51) bildet, dessen jeweiligen Sekundärelemente in Serie geschaltet sind mit einem der zwei Filamente der fluoreszierenden Lampe (T), wobei die Lampe (T) mit einem Wechselstrom mit niedriger Frequenz versorgt wird, der teilweise durch die Energie gebildet wird, die in den induktiven Elementen (50, 51) gespeichert ist, die als ein Freilaufelement während der AUS-Perioden des Schalters arbeiten.

4. Steuerschaltung nach einem der Ansprüche 1 bis 3, wobei die getaktete Stromquelle (31, M, 32) zwischen den zwei gleichgerichteten Ausgangsanschlüssen (11, 12) der Brücke (10, 10', 10") vorgesehen ist.

5. Steuerschaltung nach Anspruch 1 oder 2, wobei ein Kondensator (C1) mit niedrigem Wert parallel verbunden ist zu der Serienverbindung der Induktanz (L') mit niedrigem Wert und der Lampe (T).

6. Steuerschaltung nach Anspruch 1 oder 2, wobei der Inverter (37) mit der Frequenz der Wechselstrom-Versorgungsspannung gesteuert wird und in der Lage ist, das induktive Element (33) oder eines der induktiven Elemente (40, 41) im Freilauf zu betreiben, während der Öffnungsperioden des Schalters (31, M).

7. Steuerschaltung nach Anspruch 3, wobei jeder Transformator (50, 51) eine erste Sekundärwicklung (52p, 52n) zum Heizen eines Filaments (f, f') der Lampe (T) umfasst.

8. Steuerschaltung nach Anspruch 7, wobei jeder Transformator (50, 51) ferner eine zweite Sekundärwicklung (53p, 53n) umfasst zum Starten der Lampe (T) zum Bilden einer Ladungspumpenschaltung mit einem Kondensator (C2), der zwischen ersten Anschlüssen (1, 1') der Filamente (f, f') verbunden ist.

9. Steuerschaltung nach Anspruch 8, **dadurch gekennzeichnet, dass** jeder Transformator (50, 51) eine dritte Sekundärwicklung (54p, 54n) umfasst zum Versorgen der Lampe (T), sobald sie gestartet ist.

10. Steuerschaltung nach einem der Ansprüche 1 bis 9, **dadurch gekennzeichnet, dass** die Schaltung Mittel umfasst zum Variieren der Lichtintensität der fluoreszierenden Lampe.
